# EUROPÄISCHE PATENTSCHRIFT

(11) **EP 1 924 788 B1**
(45) Veröffentlichungstag und Bekanntmachung des Hinweises auf die Patenterteilung: **02.12.2009**
(21) Anmeldenummer: 06805301.6
(22) Anmeldetag: 15.09.2006
(51) Int. Cl.: F16H 59/10

(54) **BETÄTIGUNGSEINRICHTUNG MIT ZUSATZSCHALTELEMENT**
ACTUATING DEVICE WITH ADDITIONAL SHIFT ELEMENT
DISPOSITIF DE COMMANDE A ELEMENT DE COMMUTATION SUPPLEMENTAIRE

(30) Priorität: 15.09.2005 DE 102005044254
(43) Veröffentlichungstag der Anmeldung: 28.05.2008
(73) Patentinhaber: ZF Friedrichshafen AG, 88038 Friedrichshafen (DE)
(72) Erfinder: GIEFER, Andreas, 49448 Lemförde (DE); MEYER, Jörg, D-49419 Wagenfeld (DE)
(86) Internationale Anmeldenummer: PCT/DE2006/001645
(87) Internationale Veröffentlichungsnummer: WO 2007/031075

(56) Entgegenhaltungen:
- EP-A- 1 464 875
- WO-A2-2004/089677
- US-A- 5 220 984
- US-A- 5 379 871

## Beschreibung

Die Erfindung betrifft eine Einrichtung zur manuellen Steuerung bzw. Betätigung eines technischen Systems gemäß dem Oberbegriff von Patentanspruch 1.

Gattungsgemäße Betätigungseinrichtungen kommen beispielsweise, jedoch keineswegs ausschließlich, zur manuellen Anwahl von Schaltstufen bzw. zur Gangvorwahl bei Gangwechselgetrieben von Kraftfahrzeugen zum Einsatz. Solche Betätigungseinrichtungen, bei denen es sich beispielsweise um einen zwischen den Vordersitzen eines Kraftfahrzeugs angeordneten Betätigungshebel handeln kann, werden im Bereich des Hebelknaufs häufig mit einem zusätzlichen Schaltelement, beispielsweise mit einem Schalter, einem Taster oder auch mit einem Sensor ausgestattet.

Ein solches zusätzliches Schaltelement kann beispielsweise dazu herangezogen werden, neben der mit dem Betätigungshebel ausgeführten Hauptbetätigung zusätzliche Funktionen zu aktivieren oder zu deaktivieren.

Beispielsweise kann es sich dabei um das manuelle Starten oder Stoppen des Verbrennungsmotors eines Kraftfahrzeugs handeln, oder es kann damit beispielsweise die P-Position (Parksperre) eines automatisierten Schaltgetriebes eingelegt werden.

Betätigungseinrichtungen bzw. Betätigungshebel mit im Bereich des Knaufes angeordneten Zusatzschaltelementen sind aus dem Stand der Technik bekannt. So zeigt die DE 100 25 357 A1 einen Gangschalthebel mit einem in den Schaltknauf integrierten Schalter zur Betätigung weiterer Funktionen des Kraftfahrzeugs.

Die WO 2004/089677 A2 betrifft eine Schaltvorrichtung zur kraftlosen Übertragung von Schaltbefehlen an ein Automatikgetriebe mit einem schwenkbar gelagerten Schalthebel und einer Detektionsvorrichtung für zwei verschiedene Schaltstellungen. Die Erfindung weist einen Anschlag für eine Schaltposition auf, die über eine Betätigungsvorrichtung ausgerückt werden kann, um den Schalthebel über diese Schaltposition hinaus bewegen zu können.

Die US 5,379,871 offenbart einen Schalthebelapparat für ein Automatikgetriebe eines Kraftfahrzeuges. Durch Drücken eines Knopfes kann nach Betätigen des Bremspedals mechanisch ein Stift bewegt werden. Dieser Stift ermöglicht in der einen Position über einen Sperrhebel das Sperren des Schalthebels, so dass über den Schalthebel kein Gang eingelegt werden kann. Nach Durch Drücken des Knopfes am Schalthebel kann der Schalthebel entsperrt und anschließend bewegt werden.

Bei den aus dem Stand der Technik bekannten Betätigungseinrichtungen bzw. Betätigungshebeln mit Zusatzschaltelementen ist es jedoch erforderlich, den beispielsweise im Knauf des Betätigungshebels angeordneten Zusatzschalter eigens zu verdrahten, bzw. eine flexible elektrische Leitungsverbindung vom starren Sockelbereich des Betätigungshebels durch den Betätigungshebel hindurch bis in den Knaufbereich des Betätigungshebel zu verlegen, um die elektrischen Schaltsignale des Zusatzschaltelements zum jeweiligen Schaltempfänger übertragen zu können.

In diesem Fall wird jedoch bei jeder Bewegung des Betätigungshebels die elektrische Leitung - im Bereich der Verbindung des Betätigungshebels mit dem Hebelsockel - mitbewegt bzw. sogar jedes Mal auf Biegung verformt. Diese andauernde Biegeverformung der elektrischen Leitungsverbindung zwischen dem Zusatzschaltelement und dem Hebelsockel kann jedoch zur Ermüdung des Verbindungskabels und schlussendlich zu Beschädigung oder Versagen der Signalübertragung zwischen Zusatzschaltelement und Schaltempfänger führen.

Ferner ist es bereits bei der Montage einer derartigen bekannten Betätigungseinrichtung mit Zusatzschaltelement erforderlich, dass die elektrische Leitung zwischen dem beweglichen Betätigungselement und dem unbeweglichen Sockelbereich besonders sorgfältig verlegt wird. Denn einerseits benötigt die elektrische Leitung im Überführungsbereich zwischen Betätigungselement und Sockelbereich einen bestimmten unverbauten Freiraum für den Längen- und Bewegungsausgleich. Andererseits muss sichergestellt sein, dass die elektrische Leitung trotz der erforderlichen gewissen Beweglichkeit nicht zwischen den relativbeweglichen Bauteilen der Betätigungseinrichtung eingeklemmt werden kann. Beides erfordert jedoch große Sorgfalt beim Zusammenbau und führt damit zu einer vergleichsweise aufwändigen und kostenintensiven Montage bei den bekannten Betätigungseinrichtungen mit Zusatzschaltelement.

Schließlich ist auch die Anordnung eines elektrischen Schaltelements beispielsweise im Knauf eines Betätigungshebels ebenfalls nicht unproblematisch, da das elektrische Schaltelement in diesem Fall zusätzlichen äußeren Einflüssen ausgesetzt ist. Derartige zusätzliche äußere Einflüsse, beispielsweise Erschütterungen beim Bewegen und am Endanschlag des Bedienelements, Missbrauchskräfte, oder auch - insbesondere beim Kraftfahrzeug - starke Erwärmung, können zur vorzeitigen Alterung oder zum Ausfall des elektrischen Schaltelements führen. Dies ist jedoch, insbesondere wenn ein derartiges Zusatzschaltelement bei sicherheitskritischen Anwendungen zum Einsatz kommt, kaum akzeptabel.

Mit diesem Hintergrund ist es Aufgabe der vorliegenden Erfindung, eine Betätigungseinrichtung für ein technisches System zu schaffen, beispielsweise zur Betätigung eines Gangwechselgetriebes, die ein Zusatzschaltelement aufweist und mit der sich die genannten Nachteile des Standes der Technik überwinden lassen. Insbesondere soll die Betätigungseinrichtung die mit der - beim Stand der Technik vorhandenen - Anordnung des Zusatzschaltelements verbundene Problematik der empfindlichen, bewegten Kabelführung und des unzureichenden Schutzes des elektrischen Kontaktgebers vermeiden.

Diese Aufgabe wird durch eine Betätigungseinrichtung mit den Merkmalen von Patentanspruch 1 gelöst. Bevorzugte Ausführungsformen sind Gegenstand der Unteransprüche.

Die erfindungsgemäße Betätigungseinrichtung umfasst dabei in an sich zunächst bekannter Weise ein Betätigungselement, das in zumindest zwei verschiedene Schaltstellungen verbracht werden kann. Ferner umfasst die Betätigungseinrichtung zumindest ein Zusatzschaltelement, wobei das Zusatzschaltelement auf eine Signalgebereinrichtung wirkt, die einen beispielsweise elektrischen oder elektronischen Signalgeber aufweist.

Erfindungsgemäß zeichnet sich die Betätigungseinrichtung jedoch dadurch aus, dass Zusatzschaltelement und Signalgebereinrichtung mittels einer mechanischen Übertragungseinrichtung verbunden sind. Dabei ist der Signalgeber aber nicht am Betätigungselement angeordnet, sondern mit dem Sockelbereich der Betätigungseinrichtung verbunden.

Die Befestigung des Signalgebers im Sockelbereich der Betätigungseinrichtung bringt es mit anderen Worten mit sich, dass der Signalgeber sowohl optimal geschützt im Sockelbereich angeordnet ist, und dass auf diese Weise ferner auch die Verkabelung zwischen Signalempfänger und Signalgeber durchgängig fest und unbeweglich montiert werden kann.

Damit werden jedoch bereits die eingangs beschriebenen Nachteile bei Betätigungseinrichtungen mit im Betätigungselement angeordneten Signalgebern vollständig beseitigt. Denn dank der mechanischen Übertragungsverbindung zwischen Zusatzschaltelement und Signalgebereinrichtung, sowie dank der sockelfesten Montage des Signalgebers, entfallen sämtliche mit Verdrahtung und Signalgeberanordnung verbundenen Probleme der aus dem Stand der Technik bekannten Betätigungseinrichtungen mit Zusatzschaltelement.

Die Erfindung wird dabei zunächst einmal unabhängig davon verwirklicht, wie die Übertragungseinrichtung konstruktiv ausgeführt und angeordnet ist, und welcher Art der Signalgeber ist, solange mit der Übertragungseinrichtung und mit dem Signalgeber eine zuverlässige Auslösung des Schaltsignals bei Betätigung des Zusatzschaltelements sichergestellt ist.

Gemäß einer bevorzugten Ausführungsform der Erfindung ist jedoch der Signalgeber ein Hallsensor. Die Ausführung der erfindungsgemäßen Betätigungseinrichtung mit einem Hallsensor ist vorteilhaft insofern, als auf diese Weise eine berührungslose Übertragung des Schaltsignals vom Betätigungselement auf den Sockelbereich der Betätigungseinrichtung, bzw. auf den Signalgeber ermöglicht wird. Die berührungslose Übertragung des Schaltsignals ist wartungs- und abnutzungsfrei, und begünstigt somit die langlebige und zuverlässige Funktion der Betätigungseinrichtung.

Gemäß weiterer Ausführungsformen der Erfindung ist der Signalgeber als optischer Sensor, oder als Mikroschalter ausgeführt. Ein optischer Sensor weist - da er ebenfalls berührungslos arbeitet - ähnliche Vorteile wie ein Hallsensor auf, während ein als Mikroschalter ausgeführter Signalgeber beispielsweise besonders kostengünstig realisiert werden kann. Da auch Mikroschalter eine hohe Anzahl an Schaltspielen bewältigen, kann auch im Fall des Einsatzes eines Mikroschalters eine zuverlässige und langlebige Betätigungseinrichtung dargestellt werden.

Die Erfindung lässt sich verwirklichen unabhängig von der konkreten Ausführung und Gestalt des Betätigungselements, solange sich dabei um ein mechanisches oder elektromechanisches, bewegliches Betätigungselement handelt. Gemäß bevorzugter Ausführungsformen der Erfindung ist jedoch das Betätigungselement ein Schalthebel, ein Drehschalter oder ein Schiebeschalter. Bei solchen Betätigungselementen kann jeweils im Bereich des Betätigungselements ein Zusatzschaltelement angeordnet werden, das in erfindungsgemäßer Weise auf den im Sockelbereich der Betätigungseinrichtung angeordneten Signalgeber wirkt.

Die konstruktive Ausführung des Zusatzschaltelements ist zunächst ebenfalls beliebig, solange das Zusatzschaltelement bei der Betätigung eine zumindest geringfügige mechanische Bewegung erfährt, die sich mittels der mechanischen Übertragungseinrichtung auf die im Sockelbereich der Betätigungseinrichtung angeordnete Signalgebereinrichtung übertragen lässt.

Gemäß bevorzugter Ausführungsformen der Erfindung ist jedoch vorgesehen, dass das Zusatzschaltelement ein Drucktaster oder Druckschalter bzw. ein Wippschalter oder Schiebeschalter ist. Diese Ausführungen des Zusatzschaltelements lassen sich für die unterschiedlichsten Schaltzwecke einsetzen, und weisen bei der Betätigung jeweils den erforderlichen Schaltweg auf.

Nach einer weiteren, besonders bevorzugten Ausführungsform der Erfindung ist das Betätigungselement ein Wählhebel für ein Getriebe eines Kraftfahrzeugs, beispielsweise für ein Automatikgetriebe. Vorzugsweise dient dabei das Zusatzschaltelement zur Einlegung der Parksperre des Automatikgetriebes.

Gemäß einer alternativen Ausführungsform der Erfindung dient das Zusatzschaltelement zum Starten und/oder Stoppen des Motors eines Kraftfahrzeugs. Auf diese Weise wird der Bedienungskomfort des Kraftfahrzeugs verbessert, da Motorstart und Einlegen einer Fahrstufe zumeist in engem zeitlichen Zusammenhang stehen und damit auch von der Bedienung her mit Vorteil vereinheitlicht werden können.

Im Folgenden wird die Erfindung anhand lediglich Ausführungsbeispiele darstellender Zeichnungen näher erläutert. Dabei zeigt:
- **Fig. 1**: in schematischer isometrischer Darstellung eine Ausführungsform einer Betätigungseinrichtung gemäß der vorliegenden Erfindung;
- **Fig. 2**: in einer **Fig. 1** entsprechenden Darstellung die Betätigungseinrichtung gemäß **Fig. 1** ohne Gehäuse;
- **Fig. 3**: in einer **Fig. 2** entsprechenden Darstellung und Ansicht die Betätigungseinrichtung gemäß **Fig. 1** und **2** in Betätigungsstellung des Zusatzschaltelements;
- **Fig. 4**: in schematischer Darstellung die Betätigungseinrichtung gemäß **Fig. 1** bis **3** in der rückwärtigen Ansicht;
- **Fig. 5**: in einer **Fig. 4** entsprechenden Darstellung und Ansicht die Betätigungseinrichtung gemäß **Fig. 1** bis **4** in Betätigungsstellung des Zusatzschaltelements;
- **Fig. 6**: in einer **Fig. 2** und **3** entsprechenden Darstellung und Ansicht eine weitere Ausführungsform einer Betätigungseinrichtung;
- **Fig. 7**: in einer **Fig. 6** entsprechenden Darstellung und Ansicht die Betätigungseinrichtung gemäß **Fig. 6** in Betätigungsstellung des Zusatzschaltelements;
- **Fig. 8**: in schematischer Darstellung die Betätigungseinrichtung gemäß **Fig. 6** und **7** in der rückwärtigen Ansicht; und
- **Fig. 9**: in einer **Fig. 8** entsprechenden Darstellung und Ansicht die Betätigungseinrichtung gemäß **Fig. 6** bis **8** in Betätigungsstellung des Zusatzschaltelements.

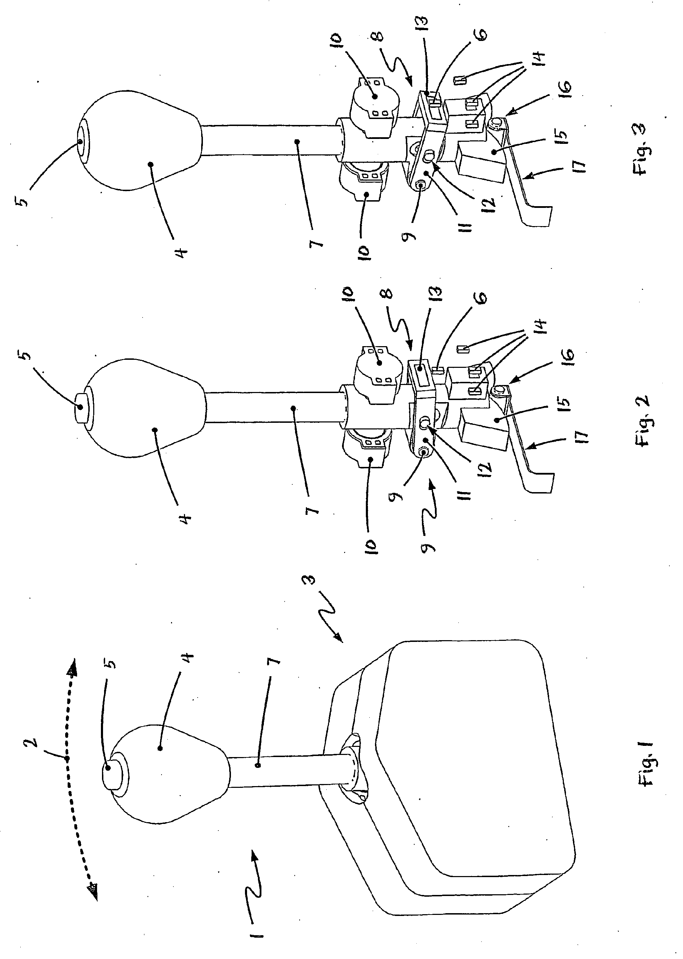

**Fig. 1** zeigt in schematischer isometrischer Darstellung eine Ausführungsform einer Betätigungseinrichtung gemäß der vorliegenden Erfindung. Bei diesem Ausführungsbeispiel handelt es sich um eine Betätigungseinrichtung für ein automatisiertes Fahrzeuggetriebe.

Man erkennt in der Darstellung der **Fig. 1** zunächst einmal das als Schalthebel ausgebildete Betätigungselement 1, das entlang der strichlierten Linie 2 relativ zu einem Sockelbereich 3 schwenkbeweglich angeordnet ist. Der Schalthebel 1 lässt sich somit in Fahrtrichtung vor und zurück bewegen, um so beispielsweise die verschiedenen Schaltstufen eines Automatikgetriebes anzuwählen.

Ferner geht aus **Fig. 1** das im Bereich des Knaufes 4 des Schalthebels 1 angeordnete zusätzliche Schaltelement 5 hervor, das im dargestellten Ausführungsbeispiel als Druckschalter bzw. Drucktaster 5 ausgebildet ist. Mit diesem Drucktaster 5 lassen sich weitere Funktionen des Kraftfahrzeugs steuern, zum Beispiel kann damit die Parksperre des Automatikgetriebes eingelegt, oder aber der Motor des Kraftfahrzeugs gestartet und gestoppt werden.

Die **Fig. 2** und **3** zeigen die Betätigungseinrichtung gemäß **Fig. 1**, wobei in den Darstellungen der **Fig. 2** und **3** das im Sockelbereich 3 der Betätigungseinrichtung angeordnete Gehäuse entfernt wurde, um die Funktionsweise der Übertragungseinrichtung und der Signalgebereinrichtung 8 der Betätigungseinrichtung erkennbar zu machen. Bei der dargestellten Ausführungsform ist der im Knauf 4 angeordnete Drucktaster 5 über ein innerhalb des Schaftes 7 des Schalthebels 1 angeordnetes (nicht sichtbares) Übertragungsgestänge mit einem U-förmig ausgebildeten Schwinghebel 8 verbunden. Der Schwinghebel 8 ist mittels eines Bolzens 9 schwenkbar im unteren Bereich des Schalthebelschafts 7 am Schalthebel 1 befestigt. Die oberhalb des Schwinghebels 8 erkennbaren Buchsen 10 stellen die Lagerung des Schalthebels 1 dar, um die die Schwenkbewegung 2 des Schalthebels 1 gemäß **Fig. 1** stattfindet.

Der Schwinghebel 8 weist im mittleren Bereich seiner Schenkel 11 jeweils ein Langloch 12 auf, das von einem Übertragungsbolzen durchgriffen wird, der wiederum mit dem unteren Ende des Übertragungsgestänges im Schalthebelschaft 7 verbunden ist. Die so gebildete Übertragungseinrichtung führt dazu, dass der Schwinghebel 8 beim Drücken des im Hebelknauf 4 angeordneten Drucktasters 5 über Übertragungsgestänge, Übertragungsbolzen und Langlöcher 12 nach unten verschwenkt wird.

Der Schwinghebel 8 trägt dabei im Bereich seines der Schwingachse 9 gegenüberliegenden Querschenkels einen Permanentmagneten 13, der zur Auslösung des als Magnetsensor bzw. Hallsensor ausgebildeten Signalgebers 6 der Betätigungseinrichtung dient.

In der Darstellung der **Fig. 3** ist der Drucktaster 5 in der niedergedrückten Stellung dargestellt, wodurch über Übertragungsgestänge, Übertragungsbolzen, Langloch 12 und Schwinghebel 8 der Permanentmagnet 13 des Schwinghebels 8 in den Bereich des Magnetsensors 6 verbracht ist. Hierdurch löst der Magnetsensor 6 ein elektrisches bzw. elektronisches Signal aus, das zum entsprechenden Schaltempfänger übertragen werden kann.

Hieraus geht der erfindungsgemäße Vorteil hervor, der insbesondere darin besteht, dass sowohl der Signalgeber 6 als auch die (hier nicht dargestellte) Verkabelung zum Signalgeber 6 fest und optimal geschützt im Sockelbereich 3 der Betätigungseinrichtung angeordnet werden kann. Beschädigungen des Signalgebers 6 oder einer zu einem Signalgeber geleiteten, bewegten Kabelverbindung, wie sie beim Stand der Technik anzutreffen sind, sind damit dank der Erfindung ausgeschlossen.

Die weiteren in **Fig. 2** und **3** erkennbaren Signalgeber 14 dienen der Positionserkennung des Schalthebels 1 und der Erzeugung der entsprechenden elektrischen bzw. elektronischen Schaltsignale.

Bei dem in den **Fig. 1** bis **3** abgebildeten Schalthebel 1 handelt es sich um einen Schalthebel, der nach jeder Betätigung selbsttätig in die Mittelstellung zurückkehrt. Zu diesem Zweck weist der Schalthebel 1 an seinen unteren Ende eine Funktionskontur 15 auf, in die eine federbelastete Rolle 16 eingreift dergestalt, dass der Schalthebel 1 nach dem Loslassen aufgrund der Federwirkung der mit der Rolle 16 verbundenen Blattfeder 17 stets wieder in die aufrechte Mittelstellung zurückkehrt.

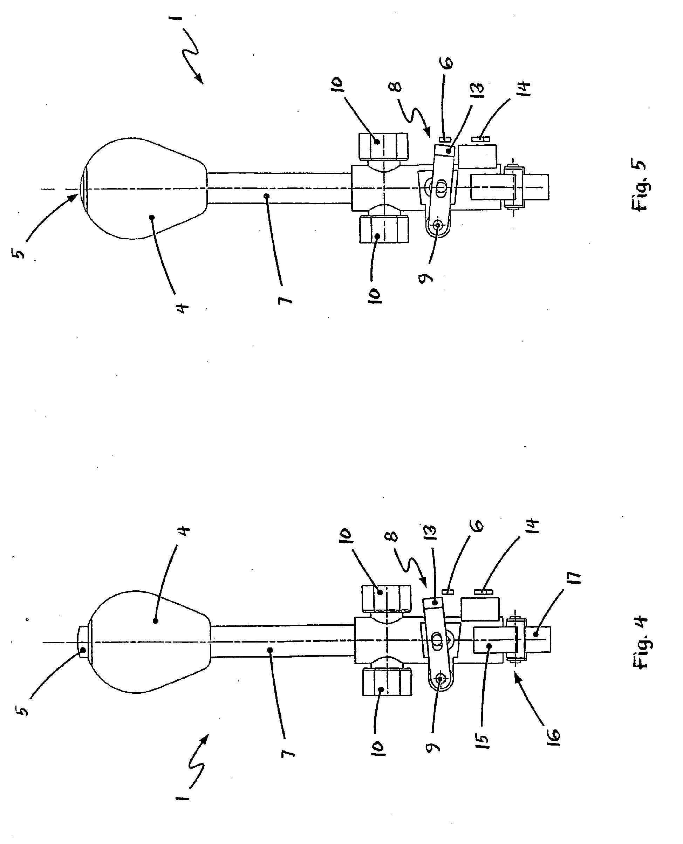

Die **Fig. 4** und **5** zeigen die Betätigungseinrichtung gemäß der **Fig. 1** bis **3** nochmals in der rückwärtigen Ansicht (bezogen auf die Fahrtrichtung eines mit der Betätigungseinrichtung ausgestatteten Kraftfahrzeugs). Dabei zeigt **Fig. 4** Drucktaster 5, Übertragungsgestänge und Schwinghebel 8 in der Neutralstellung, während dieselben Elemente in **Fig. 5** jeweils in Betätigungsstellung dargestellt sind.

Durch eine Zusammenschau von **Fig. 4** und **Fig. 5** wird erkennbar, dass beim Herunterdrücken des Drucktasters 5 auch der Schwinghebel 8 nach unten bewegt wird, wodurch der Permanentmagnet 13 des Schwinghebels in unmittelbare Nähe des Magnetsensors bzw. Signalgebers 6 verbracht wird. Auf diese Weise wird das mit der Betätigung des Drucktasters 5 verbundene Schaltsignal berührungsfrei ausgelöst und übertragen.

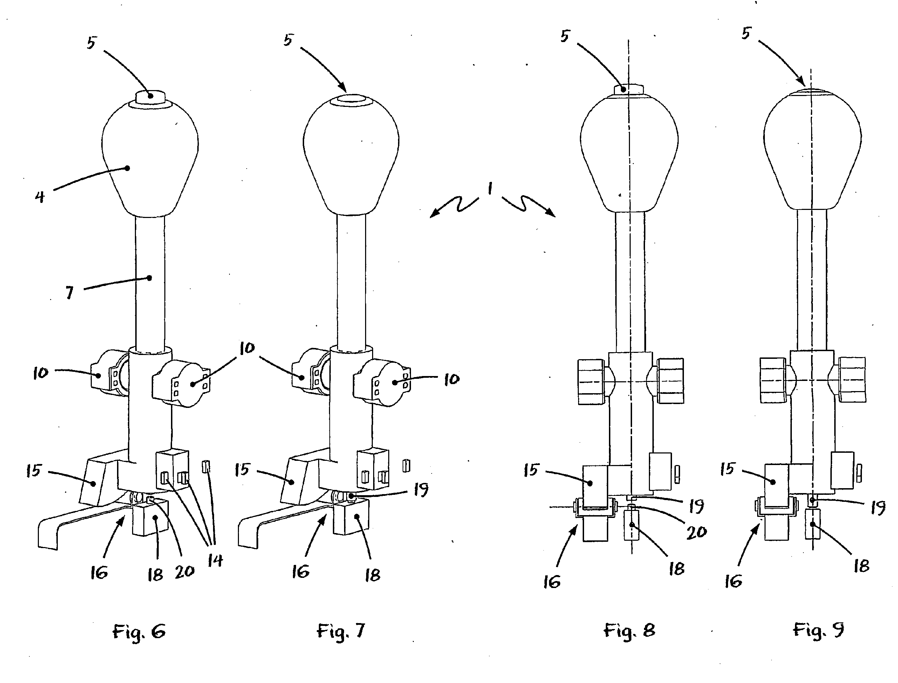

Die **Fig. 6** bis **9** zeigen eine weitere Ausführungsform einer Betätigungseinrichtung gemäß der vorliegenden Erfindung. Bei der in den **Fig. 6** bis **9** dargestellten Betätigungseinrichtung handelt es sich ebenfalls um die Betätigung eines shift-by-wire-Schaltgetriebes, bzw. eines Automatikgetriebes eines Kraftfahrzeugs.

Die Ausführungsform gemäß **Fig. 6** bis **9** unterscheidet sich von der Ausführungsform gemäß **Fig. 1** bis **5** insbesondere dadurch, dass die Übertragung des Schaltsignals vom Drucktaster 5 auf den hier als Mikroschalter 18 ausgebildeten Signalgeber bei der Ausführungsform gemäß **Fig. 6** bis **9** nicht berührungslos, sondern vielmehr mittels eines mit dem Übertragungsgestänge verbundenen Übertragungsstiftes 19 erfolgt. Dabei zeigen die **Fig. 6** und **8** Drucktaster 5, Übertragungsgestänge, Mikroschalter 18 und Übertragungsstift 19 jeweils in der nicht betätigten Neutralstellung, während die **Fig. 7** und **9** die Situation bei Betätigung des Druckschalters 5 darstellen.

Bei der in den **Fig. 6** bis **9** dargestellten Ausführungsform sind Mikroschalter 18 und Übertragungsstift 19 so ausgebildet, dass eine Auslösung des Mikroschalters 18 nur in der neutralen Mittelstellung des Schalthebels 1 erfolgen kann. Diese Ausführung ist nicht Teil der Erfindung. Der Übertragungsstift 19, bzw. der Auslöser 20 des Mikroschalters 18 können gemäß der Erfindung jedoch ohne weiteres auch so ausgebildet werden, dass eine Übertragung des Schaltsignals vom Drucktaster 5 auch in der aus der Mittelstellung ausgelenkten Betätigungsstellung des Schalthebels 1 erfolgen kann.

Hierzu kann entweder der Übertragungsstift 19 des Übertragungsgestänges, oder der Auslöser 20 des Mikroschalters 18 - oder aber auch beide Elemente 19 und 20 - beispielsweise mit einer (nicht dargestellten) Auslöserkufe versehen werden, die unabhängig von der momentanen Relativwinkelstellung zwischen am Sockelbereich 3 befestigten Mikroschalter 18, die Übertragung des Schaltsignals vom Drucktaster 5 auf den Mikroschalter 18 erlaubt.

Aus den **Fig. 6** und **7** geht ferner wieder eine Magnetsensoranordnung 14 hervor, die zusammen mit einem im unteren Bereich des Schalthebels 1 angeordneten Permanentmagneten zur Detektion der jeweiligen momentanen Position des Schalthebels 1 dient. Ferner geht aus den **Fig. 6** bis **9** auch wieder eine mit dem unteren Ende des Schalthebels 1 verbundene Funktionskontur 15 hervor, die zusammen mit der federbelasteten Rolle 16 dafür sorgt, dass der Schalthebel 1 nach jeder Schaltbetätigung wieder in die Mittelstellung zurückkehrt.

Im Ergebnis wird damit deutlich, dass mit der Erfindung eine Betätigungseinrichtung für technische Systeme, dabei insbesondere für Gangwechselgetriebe von Kraftfahrzeugen geschaffen wird, bei der ein am Betätigungselement angeordnetes Zusatzschaltelement besonders robust und störungsarm ausgeführt werden kann. Insbesondere werden mit der Erfindung die aus dem Stand der Technik bekannten Nachteile bezüglich der empfindlichen Kabelführung zum Zusatzschaltelement, sowie bezüglich des mit der exponierten Anbringung verbundenen unzureichenden Schutzes des Kontaktgebers beseitigt. Die Erfindung leistet damit einen Beitrag zur dauerhaft sicheren Bedienbarkeit von technischen Systemen, insbesondere bei der Anwendung im Bereich der Kraftfahrzeugsysteme bzw. der Getriebebetätigung.

### Bezugszeichenliste

- 1: Schalthebel, Betätigungselement
- 2: Bewegungsrichtungen
- 3: Sockelbereich
- 4: Hebelknauf
- 5: Zusatzschaltelement, Drucktaster
- 6: Signalgeber, Magnetsensor
- 7: Hebelschaft
- 8: Schwinghebel
- 9: Lagerbolzen, Schwingachse
- 10: Lagerbuchse
- 11: Schenkel
- 12: Langloch
- 13: Permanentmagnet
- 14: Signalgeber
- 15: Funktionskontur
- 16: Rolle
- 17: Blattfeder
- 18: Mikroschalter
- 19: Übertragungsstift
- 2 0: Auslöser

## Patentansprüche

1. Betätigungseinrichtung für ein technisches System, beispielsweise zur Auswahl von Schaltstufen eines shift-by-wire-Gangwechselgetriebes, die Betätigungseinrichtung umfassend ein gegenüber einem Sockelbereich (3) relativbewegbares Betätigungselement (1) mit mindestens zwei Schaltstellungen, wobei an dem Betätigungselement (1) zumindest ein Zusatzschaltelement (5) und eine Signalgebereinrichtung (8) angeordnet sind, wobei das Zusatzschaltelement (5) und die Signalgebereinrichtung (8) mittels einer mechanischen Übertragungseinrichtung derart verbunden sind, dass beim Drücken des Zusatzschaltelementes die Signalgebereinrichtung bewegt wird, und unabhängig von der Relativstellung des Betätigungshebels (1) mit einem am Sockelbereich (3) befestigten Signalgeber wirkt (6, 14, 18), um die Übertragung eines Schaltsignals vom Drucktaster (5) auf den Signalgeber (6, 14, 18) zu ermöglichen.

2. Betätigungseinrichtung nach Anspruch 1,
wobei der Signalgeber (6) ein Hallsensor ist.

3. Betätigungseinrichtung nach Anspruch 1,
wobei der Signalgeber (6) ein optischer Sensor ist.

4. Betätigungseinrichtung nach Anspruch 1,
wobei der Signalgeber ein Mikroschalter (18) ist.

5. Betätigungseinrichtung nach einem der Ansprüche 1 bis 4, wobei ein Auslöser (20) des Mikroschalters (18) und/oder ein Übertragungsstift (19) zum Auslösen des Mikroschalters (18) mit einer Auslösekufe versehen sind.

6. Betätigungseinrichtung nach einem der Ansprüche 1 bis 4,
wobei das Betätigungselement (1) ein Schalthebel ist.

7. Betätigungseinrichtung nach einem der Ansprüche 1 bis 4,
wobei das Betätigungselement ein Drehschalter ist.

8. Betätigungseinrichtung nach einem der Ansprüche 1 bis 4,
wobei das Betätigungselement ein Schiebeschalter ist.

9. Betätigungseinrichtung nach einem der Ansprüche 1 bis 8,
wobei das Zusatzschaltelement (5) ein Drucktaster oder Druckschalter ist.

10. Betätigungseinrichtung nach einem der Ansprüche 1 bis 9,
wobei das Zusatzschaltelement ein Wippschalter oder Schiebeschalter ist.

11. Betätigungseinrichtung nach einem der Ansprüche 1 bis 10,
wobei das Betätigungselement (1) ein Wählhebel eines Kraftfahrzeuggetriebes ist.

12. Betätigungseinrichtung nach einem der Ansprüche 1 bis 11,
wobei das Zusatzschaltelement (5) zur Einlegung der P-Position eines Kraftfahrzeug-Automatikgetriebes eingerichtet ist.

13. Betätigungseinrichtung nach einem der Ansprüche 1 bis 12,
wobei das Zusatzschaltelement (5) zum Starten und/oder Stoppen des Motors eines Kraftfahrzeugs eingerichtet ist.

## Claims

1. Actuating device for a technical system, for example for the selection of shift steps of a shift-by-wire change speed transmission, the actuating device comprising an actuating element (1) that is movable relative to a base region (3) and has at least two shift positions, wherein on the actuating element (1) at least one additional switching element (5) and a signal transmitting device (8) are disposed, wherein the additional switching element (5) and the signal transmitting device (8) are connected by means of a mechanical transmission device in such a way that, when the additional switching element is pressed, the signal transmitting device is moved and independently of the relative position of the actuating lever (1) interacts with a signal transmitter (6, 14, 18) fastened to the base region (3) in order to enable the transmission of a switching signal from the pushbutton (5) to the signal transmitter (6, 14, 18).

2. Actuating device according to claim 1,
wherein the signal transmitter (6) is a Hall-effect sensor.

3. Actuating device according to claim 1,
wherein the signal transmitter (6) is an optical sensor.

4. Actuating device according to claim 1,
wherein the signal transmitter is a microswitch (18).

5. Actuating device according to one of claims 1 to 4,
wherein an actuator (20) of the microswitch (18) and/or a transmission pin (19) for actuating the microswitch (18) are provided with an actuating rocker.

6. Actuating device according to one of claims 1 to 4,
wherein the actuating element (1) is a gearshift lever.

7. Actuating device according to one of claims 1 to 4,
wherein the actuating element is a rotary switch.

8. Actuating device according to one of claims 1 to 4,
wherein the actuating element is a slide switch.

9. Actuating device according to one of claims 1 to 8,
wherein the additional switching element (5) is a pushbutton or pressure-operated switch.

10. Actuating device according to one of claims 1 to 9,
wherein the additional switching element is a rocker switch or slide switch.

11. Actuating device according to one of claims 1 to 10,
wherein the actuating element (1) is a selector lever of a motor vehicle transmission.

12. Actuating device according to one of claims 1 to 11,
wherein the additional switching element (5) is devised for engagement of the P position of a motor vehicle automatic transmission.

13. Actuating device according to one of claims 1 to 12,
wherein the additional switching element (5) is devised for starting and/or stopping the engine of a motor vehicle.

## Revendications

1. Dispositif actionneur pour un système technique, par exemple pour la sélection d'étages de commutation d'une boîte de vitesses à changement de rapports électrique dite *shift-by-wire*, le dispositif actionneur comprenant un élément actionneur (1) mobile par rapport à une partie de socle (3), ayant au moins deux positions de commutation au moins un élément de commutation supplémentaire (5) et un dispositif émetteur de signal (8) étant agencés sur l'élément actionneur (1), l'élément de commutation supplémentaire (5) et le dispositif émetteur de signal (8) étant reliés l'un à l'autre par l'intermédiaire d'un dispositif transmetteur mécanique de manière telle que, lorsqu'on appuie sur l'élément de commutation supplémentaire, le dispositif émetteur de signal soit déplacé et coopère, indépendamment de la position relative du levier actionneur (1), avec un émetteur de signal (6, 14, 18) fixé dans la partie de socle (3), de manière à permettre la transmission d'un signal de commutation du bouton poussoir (5) à l'émetteur de signal (6, 14, 18).

2. Dispositif actionneur selon la revendication 1,
où l'émetteur de signal (6) est un capteur à effet Hall.

3. Dispositif actionneur selon la revendication 1,
où l'émetteur de signal (6) est un détecteur optique.

4. Dispositif actionneur selon la revendication 1,
où l'émetteur de signal est un micro-rupteur (18).

5. Dispositif actionneur selon l'une des revendications 1 à 4,
où un déclencheur (20) du micro-rupteur (18) et/ou une tige de transmission (19) est pourvu(e) d'un patin de déclenchement destiné à déclencher le micro-rupteur (18).

6. Dispositif actionneur selon l'une des revendications 1 à 4,
où l'élément actionneur (1) est un levier de commutation.

7. Dispositif actionneur selon l'une des revendications 1 à 4,
où l'élément actionneur est un contacteur rotatif.

8. Dispositif actionneur selon l'une des revendications 1 à 4,
où l'élément actionneur est un contacteur coulissant.

9. Dispositif actionneur selon l'une des revendications 1 à 8,
où l'élément de commutation supplémentaire (5) est un bouton poussoir ou commutateur poussoir.

10. Dispositif actionneur selon l'une des revendications 1 à 9,
où l'élément de commutation supplémentaire est un contacteur à bascule ou un contacteur coulissant.

11. Dispositif actionneur selon l'une des revendications 1 à 10,
où l'élément actionneur (1) est un levier sélecteur d'une boîte de vitesses d'un véhicule automobile.

12. Dispositif actionneur selon l'une des revendications 1 à 11,
où l'élément de commutation supplémentaire (5) est configuré pour enclencher une position P d'une boîte de vitesses automatique d'un véhicule automobile.

13. Dispositif actionneur selon l'une des revendications 1 à 12,
où l'élément de commutation supplémentaire (5) est configuré pour démarrer et/ou arrêter le moteur d'un véhicule automobile.
